(19) **Europäisches Patentamt**
**European Patent Office**
**Office européen des brevets**

(11) Veröffentlichungsnummer: **0 079 616**
**A1**

(12) # EUROPÄISCHE PATENTANMELDUNG

(21) Anmeldenummer: **82110593.9**

(22) Anmeldetag: **16.11.82**

(51) Int. Cl.³: **B 62 K 19/00**

(30) Priorität: **17.11.81 DE 3145634**

(43) Veröffentlichungstag der Anmeldung:
**25.05.83 Patentblatt 83/21**

(84) Benannte Vertragsstaaten:
**AT BE CH DE FR GB IT LI LU NL SE**

(71) Anmelder: **Muth, Hans A.**
**Schmiedweg 1**
**D-8031 Seefeld(DE)**

(72) Erfinder: **Muth, Hans A.**
**Schmiedweg 1**
**D-8031 Seefeld(DE)**

(74) Vertreter: **Patentanwälte Müller-Boré, Deufel, Schön,**
**Hertel, Lewald, Otto**
**Postfach 86 07 20 Siebertstrasse 4**
**D-8000 München 86(DE)**

(54) Fahrrad.

(57) Bei diesem Fahrrad ist der Rahmen (10) entweder aus Aluminiumblech gestanzt und gefaltet oder aus Druckguß gefertigt. An dem Rahmen (10) ist ein Antriebsausleger (20) in Form eines Kragarmes befestigt. Der Rahmen (10) ist in seinem hinteren, dem Sattel (19) benachbarten Bereich doppelwandig ausgebildet. Das Hinterrad (24) ist auf einer an dem Antriebsausleger (20) einseitig gelagerten Achse angebracht, so daß Hinterrad (24) und Vorderrad (26) identisch ausgebildet sein können. In dem Antriebsausleger befinden sich die Zahnkränze und die Antriebskette. An einer dreiteilig ausgebildeten Vorderradgabel (14) ist oben ein Steuerkopf (28) angeordnet, der Hülsen zur Aufnahme eines vorn ringförmig geschlossenen Lenkers (16) aufweist, eine Ablagefläche (40) und eine vor dieser Ablagefläche außermittig angeordnete Lampe (42). Die Räder (24 und 26) sind aus Speichensegmenten zusammengesetzt, die über einen Spannkonus mit den Felgen verspannt sind.

Fig. 1

Croydon Printing Company Ltd.

EP 0 079 616 A1

Beschreibung

Die Erfindung betrifft ein Fahrrad mit einem Rahmen, mit einem Tretlager und einer Lagerung für ein Hinterrad, mit einer drehbaren Gabel zur Lagerung eines Vorderrades, mit einem Lenker und mit einem Sattel.

Fahrräder erfreuen sich in zunehmendem Maße größerer Beliebtheit, was verschiedenen Faktoren zuzuschreiben ist. Die Ansprüche an ein zeitgemäßes Fahrrad werden immer größer, damit verbunden wächst der Preis derartiger Fahrzeuge. Zur Herstellung eines aus vielen Einzelteilen bestehenden Fahrzeuges sind viele Arbeitsgänge notwendig. Ein herkömmliches Fahrrad weist einen im wesentlichen aus Rohren zusammengesetzten Rahmen auf, dessen Herstellung umständlich ist und der wegen der großen angreifenden Kräfte exakt verarbeitet sein muß.

Der Erfindung liegt die Aufgabe zugrunde, ein Fahrrad zu schaffen, dessen Herstellung vereinfacht ist und das sich beim Gebrauch durch größere Sicherheit auszeichnet.

Die Lösung dieser Aufgabe ist erfindungsgemäß dadurch gekennzeichnet, daß der Rahmen aus einem Stück gefertigt oder aus zwei Schalen zusammengesetzt ist, daß das Tretlager in einer Antriebseinheit in Form eines Auslegers ausgebildet ist und daß am freien Ende des Auslegers die Lagerung für das angetriebene Hinterrad vorgesehen ist. Ein derartiger Rahmen wird nicht mehr aus einzelnen Rohrabschnitten zusammengeschweißt, was im wesentlichen nur von Hand geschehen kann, sondern er kann durch maschinelle Fertigungsmethoden hergestellt werden.

Ein derartiger Rahmen kann gemäß bevorzugten Ausführungsformen aus Druckguß bestehen oder aus Blech geformt werden, wobei dann die Rahmenwandungen aus einem Blech gestanzt und in dem Bereich, der der Lagerung der Vorderradgabel dient, gefaltet wird, wonach dann die aneinanderstoßenden Seitenwände des Rahmens miteinander verbunden werden. Ebenso können zwei Teile aus einem Blech gestanzt, entsprechend geformt und umlaufend miteinander zu einem Rahmen verbunden werden. Die Stöße oder Nähte an dem Rahmen können entweder verschweißt oder gebördelt werden. Zur Versteifung des Rahmens in den Ebenen, in denen die größten Kräfte auftreten, kann dieser mit Sicken oder Versteifungsrippen ausgebildet sein.

In Ausgestaltung der Erfindung kann vorgesehen sein, daß unten am Rahmen ein Anlagebereich ausgebildet wird und daß der Antriebsausleger an diesem Anlagebereich befestigt wird. Dabei kann der Anlagebereich einstückig an dem Rahmen angeformt sein oder als besonderes Teil geformt und mit dem Rahmen lösbar oder unlösbar verbunden werden. Der Anlagebereich ist zweckmäßig im Querschnitt satteldachförmig mit Seitenwangen ausgebildet, wobei die Wandungen des Anlagebereichs verstärkt sein können. Diese Ausbildung ist zweckmäßig, da in dem Anlagebereich die größten Kräfte aufgenommen und übertragen werden müssen. An dem Anlagebereich ist der als Kragarm ausgebildete Antriebsausleger angeordnet.

In Ausgestaltung der Erfindung kann vorgesehen sein, daß der Antriebsausleger einstückig ausgebildet und lösbar an dem Anlagebereich befestigt ist. In diesem Fall kann der Antriebsausleger als geschlossener Kasten ausgebildet sein, der in dem Bereich, in dem er an dem Anlagebereich befestigt wird, offen ist, um die Kettenräder und die Kette einbauen zu können. Es ist aber auch möglich, den Antriebsausleger aus zwei Seitenschalen zusammenzusetzen, die dann beispielsweise durch Schrauben miteinander verbunden werden.

Gemäß einer anderen bevorzugten Ausführungsform kann vorgesehen sein, daß der Antriebsausleger einstückig an dem Rahmen angeformt ist und daß eine Seitenwand des Antriebsauslegers ganz oder teilweise abnehmbar ist. Dabei bilden Antriebsausleger, Anlagebereiche und Rahmen eine untrennbare Verbindung. Um die Antriebsteile einbauen zu können, muß der Antriebsausleger durch Abnehmen eines Wandungsteiles zugänglich sein.

Der Antriebsausleger kann, wie der Rahmen, aus Blech oder Druckguß bestehen und Rahmen und Antriebsausleger können aus Aluminium sein.

Um das Gewicht des Fahrrads so gering wie möglich zu halten und um angreifendem Seitenwind eine kleine Widerstandsfläche entgegenzusetzen, kann vorgesehen sein, daß der Rahmen im vorderen Bereich auf die Lenksäule folgend einen Ausschnitt aufweist und im hinteren Bereich doppelwandig ausgebildet ist. Durch diesen Ausschnitt wird gleichzeitig ein Griff geschaffen, mit dem das Fahrrad angehoben werden kann. Die doppelwandige Ausbildung des Rahmens im hinteren Bereich bringt einen guten Übergang von dem Anlagebereich zu dem Rahmen. Da in dem Bereich während des Tretens die Beine des Radfahrers verlaufen, würde ein Durchbruch keine Verringerung der Seitenwindangriffsfläche ergeben. Im Bereich des Ausschnitts kann der Rahmen an den Stoßkanten der Rahmenwandungen verschweißt oder gebördelt sein.

In Ausgestaltung der Erfindung kann vorgesehen sein, daß im hinteren doppelwandigen Bereich des Rahmens eine Sattelstange höhenverstellbar geführt ist und daß die Sattelstange an ihrem freien oberen Ende einen in die Horizontale übergehenden Abschnitt aufweist. Dadurch ist es möglich, den Sattel sowohl in der Höhe als auch im Abstand zur Lenkstange zu verstellen, so daß das Fahrrad individuell auf die Körperabmessungen des Benutzers einstellbar ist.

Weiterhin kann vorgesehen sein, daß zwischen dem freien Ende des Antriebsauslegers und dem hinteren oberen Bereich des Rahmens eine lösbare Strebe zur Befestigung, beispielsweise eines Schutzbleches, vorgesehen ist. Da das Hinterrad am Ende des Auslegers gelagert ist und der Antriebsausleger in Form eines Kragarmes an dem Rahmen angebracht ist, ist eine Abstützung des Antriebsauslegers nicht nötig. Eine derartige Strebe kann zum einen aus optischen Gründen und zum anderen wegen der Befestigung eines Schutzbleches für das Hinterrad und eines Gepäckträgers angeordnet werden.

In Weiterbildung der Erfindung kann vorgesehen sein, daß die Gabel aus einer im Rahmen drehbar gehaltenen Gabelsäule mit zwei kurzen Gabelrohren besteht und daß die die Achse des Vorderrades tragenden Gabelzinken in diese Gabelrohre einsteckbar und befestigbar angeordnet sind. Die Gabel ist nicht einstückig ausgebildet sondern besteht aus drei Teilen, was wiederum zur Vereinfachung der Herstellung beiträgt.

Vorzugsweise kann oben an der Gabelsäule ein Befestigungsschild vorgesehen sein, und an dem Befestigungsschild und oben an den Gabelrohren kann ein Steuerkopf befestigt werden. An diesem Steuerkopf kann vorzugsweise ein Lenker mit Griffen für die Bremsen angeordnet sein, wobei der Lenker im vorderen Bereich geschlossen ringförmig ausgebildet ist und im hinteren Bereich zwei nach unten ausgerichtete rohrförmige Ansatzstücke zur Befestigung am Steuerkopf aufweist. Ein derartig ausgebildeter Lenker erhöht die Sicherheit des Fahrrads, da wegen der geschlossenen Form keine freien Lenkerenden vorhanden sind, die bei einem Sturz beispielsweise in den Körper des Radfahrers eindringen könnten. Wegen der zwei an dem Steuerkopf befestigten Ansatzstücke kann der Lenker an dem Fahrrad nicht verdreht werden.

Bevorzugterweise können die rohrförmigen Ansatzstücke des Lenkers in Hülsen am Steuerkopf eingesteckt sein und mit Befestigungseinrichtungen am Steuerkopf arretiert werden. Damit ist es möglich, den Lenker durch Lösen der Arretierungseinrichtung und Verschieben in den Hülsen in der Höhe zu verstellen.

In Weiterbildung der Erfindung kann vorgesehen sein, daß am Steuerkopf ein Schutzblech für das Vorderrad und eine Ablagefläche angeordnet sind. Die an einem herkömmlichen Fahrrad vorgeschriebene Beleuchtung kann aus einem im Sattel integrierten Rücklicht bestehen und aus einer links am Steuerkopf in Fahrtrichtung außermittig angeordneten Lampe.

In Ausgestaltung der Erfindung kann vorgesehen sein, daß in dem doppelwandigen Bereich des Rahmens eine teilweise herausziehbare Kette mit einem Schloß vorgesehen ist und daß auf beiden Seiten des Rahmens eine Verriegelungsvorrichtung für das Schloß angeordnet ist. Die mit dem Schloß gesicherte Kette kann aus dem Rahmen herausgezogen, beispielsweise um eine Laterne gelegt und wieder an dem Rahmen eingesteckt und verschlossen werden. Es braucht keine getrennte Sicherungsvorrichtung mehr mitgeführt zu werden. Außerdem wäre es möglich, in dem doppelwandigen Teil des Rahmens eine abschließbare Luftpumpe vorzusehen.

Gemäß einer bevorzugten Ausführungsform kann der Antriebsausleger in Draufsicht asymmetrisch ausgebildet sein und das Hinterrad seitlich neben dem Antriebsausleger angeordnet werden. Dabei kann am hinteren Ende des Antriebsauslegers eine einseitig gelagerte Achse angeordnet sein, an der das Hinterrad befestigt wird. Bei einer derartigen Ausgestaltung können Hinterrad und Vorderrad identisch ausgebildet sein, da das Kettenrad nicht mehr mit dem Hinterrad verbunden ist, sondern an der angetriebenen Achse, die am Antriebsausleger gelagert ist, angebracht ist. Die Räder können dabei aus einer Felge und Speichensegmenten zusammengesetzt sein, wobei die Speichensegmente mittels eines Spannkonus gegen die Felgen gedrückt sind und dieser Spannkonus an der Vorder- bzw. der Hinterachse befestigt wird.

In Ausgestaltung der Erfindung kann vorgesehen sein, daß der doppelwandig ausgebildete Bereich des Rahmens mit einer Klappe oder einem Behälter versehen ist. Damit ist es möglich, im Inneren des Rahmens Werkzeug, eine Luftpumpe od. dgl. zu verstauen. Es können auch zwei Behälter je an einer Seite einer im Rahmen befestigten Mittelwand vorgesehen sein.

In weiterer Ausgestaltung der Erfindung kann vorgesehen sein, daß der Rahmen aus Kunststoff besteht, wobei vorzugsweise zwischen Schalen aus Kunststoff Verstärkungsprofile bzw. Einlagen angeordnet sind, Blech- oder SMC-Einlagen umschäumt sind oder heißgepreßte SMC-Elemente mit Glasfaser- oder Kohlenstoffasereinlage Verwendung finden.

Die Erfindung wird im folgenden anhand mehrerer Ausführungsbeispiele unter Bezugnahme auf die Zeichnung näher erläutert. Es zeigen:

Fig. 1         ein Fahrrad in Seitenansicht,

Fig. 2         das Fahrrad von Fig. 1 in Explosivdarstellung,

Fig. 3 bis Fig. 9 verschiedene Herstellungsphasen eines Rahmens,

Fig. 10 bis Fig. 17 verschiedene Ausgestaltungsformen eines Rahmens,

Fig. 18        ein Ausführungsbeispiel eines Antriebsauslegers,

Fig. 19        eine Vorderradgabel,

Fig. 20        in Explosivdarstellung einen Steuerkopf,

Fig. 21        den Steuerkopf von Fig. 20 in Seitenansicht,

Fig. 22 und Fig. 23  in Seitenansicht zwei Ausführungsformen von Rädern,

Fig. 24        in vergrößerter Darstellung einen Ausschnitt eines Rades und

Fig. 25        Schnitte gemäß der Linie A-A von Fig. 22 und
Fig. 26        eine Ausführungsform einer Diebstahlsicherung.
Fig. 27 bis Fig. 30 verschiedene Ausführungsformen von
               Kunststoffrahmen.

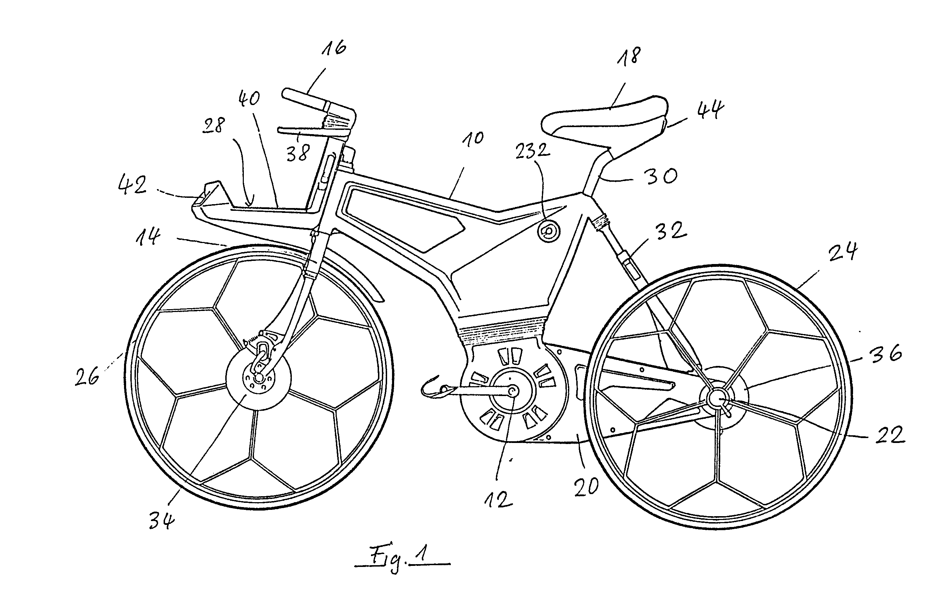

Fig. 1 zeigt ein Fahrrad in Seitenansicht mit einem Rahmen
10, einem Tretlager 12, einer an dem Rahmen 10 drehbar
gelagerten Gabel 14, einem Lenker 16 und einem Sattel 18.
Das Tretlager 12 ist in einen Antriebsausleger 20 integriert, der an seinem hinteren freien Ende eine angetriebene Achse 22 aufweist, an der ein Hinterrad 24
angeordnet ist. An der Gabel 14 ist ein Vorderrad 26
gelagert, das identisch wie das Hinterrad 24 ausgebildet
ist. Am oberen Bereich der Gabel 14 ist ein Steuerkopf
28 befestigt.Der Sattel 18 ist an einer Sattelstange 30
befestigt, die im hinteren Bereich des Rahmens 10 höhenverstellbar geführt ist. Zwischen dem Antriebsausleger
20 und dem Rahmen 10 ist eine Strebe 32 lösbar befestigt,
an der beispielsweise ein nicht dargestelltes Schutzblech angebracht werden kann. Die Strebe 32 erstreckt
sich zwischen dem freien Ende des Antriebsauslegers 20
und dem hinteren oberen Bereich des Rahmens 10.

An der Achse des Vorderrads 26 ist eine Bremsscheibe 34
und an der Achse des Hinterrads 24 eine Bremsscheibe 36
vorgesehen. An diesen Bremsscheiben greifen Bremsklötze an, die über Seilzüge und an der Lenkstange 16 vorgesehenen Hebeln 38 betätigt werden. An der vorderen Kante einer am Steuerkopf 28 vorgesehenen Ablagefläche 40 ist außermittig links eine Lampe 42 angebracht. Zur Sicherung des Fahrrads bei Nacht nach hinten ist im Sattel 18 ein Rücklicht 44 integriert.

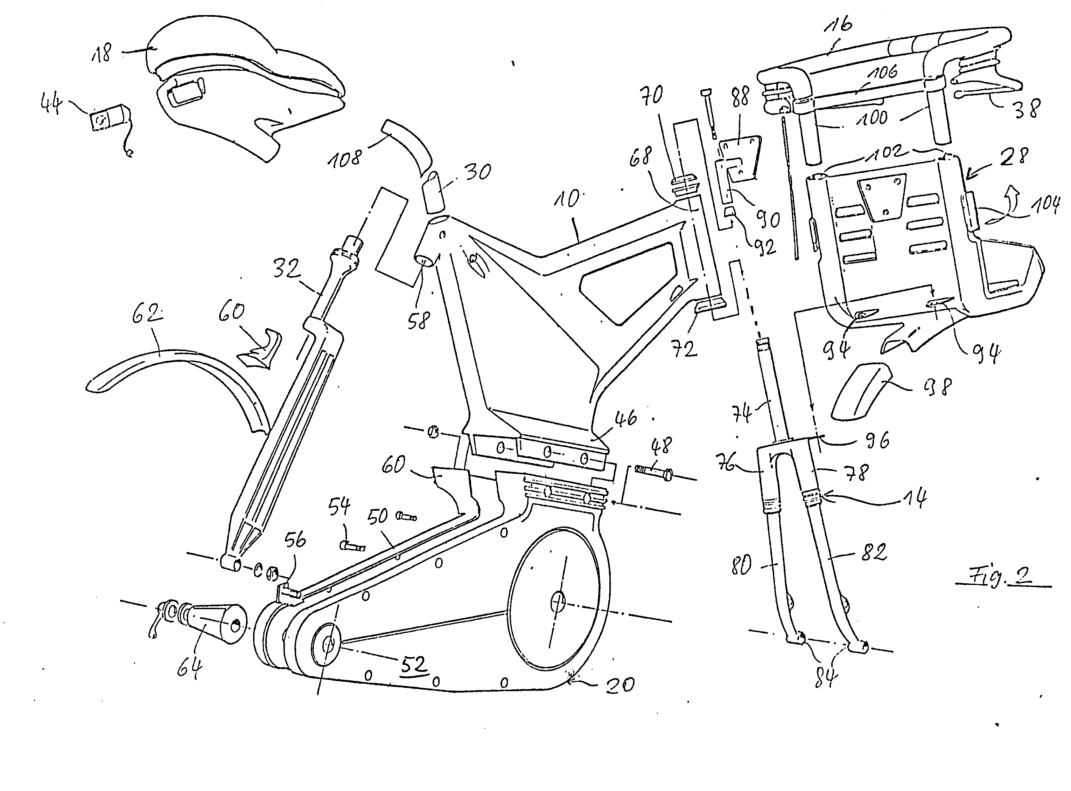

Fig. 2 zeigt das Fahrrad nach Fig. 1 von der anderen Seite her in perspektivischer Explosivdarstellung. Die Räder 24 und 26 sind dabei weggelassen. Aus der Figur ist zu sehen, daß unten an dem Rahmen 10 ein Anlagebereich 46 angeformt ist. An diesem Anlagebereich ist über Schrauben 48 der aus zwei Schalen 50, 52 bestehende Antriebsausleger befestigt, wobei die Schalen 50 und 52 ihrerseits durch Schrauben 54 miteinander verbunden sind. Der Antriebsausleger 20 ist an seinem oberen Bereich so ausgebildet, daß er mit dem Anlagebereich 46 spielfrei zur Anlage kommt. Am hinteren Ende der Schale 50 ist oben ein Lagerschild 56 zur Befestigung des unteren Endes der Strebe 32 vorgesehen, die mit ihrem oberen, zylindrisch ausgebildeten Ende in einen Ansatzstutzen 58 am Rahmen 10 eingesteckt ist. An der Strebe 32 ist eine Konsole 60 befestigt, an der wiederum ein Schutzblech 62 angebracht werden kann.

In dem Antriebsausleger 20 sind zumindest ein vorderes großes Kettenrad und zumindest ein hinteres kleines Kettenrad jeweils auf einer Achse gelagert. Die in Fig. 2 nicht dargestellte Achse für das Hinterrad steht auf der Seite der Schale 50 über diese hervor und weist einen Konus 64 auf, auf dem wie später ausgeführt ein aus Segmenten zusammengesetztes Hinterrad aufgespannt ist. Der Antriebsausleger 20 ist asymmetrisch ausgebildet, d.h. das obere Ende 66 der Schale 50 kragt seitlich über die Schale hervor, so daß ein auf dem Spannkonus 64 aufgespanntes Hinterrad in der Ebene liegt, die senkrecht mittig durch den Rahmen 10 gelegt werden kann.

Im vorderen Bereich ist der Rahmen 10 in Form eines Rohres 68 ausgebildet. In den Enden des Rohres 68 sind oben und unten als Gleitlager dienende Scheiben 70 und 72 vorgesehen, durch die die Säule 74 der Gabel 14 verläuft. Die Gabel 14 ist, wie insbesondere auch aus Fig. 19 zu ersehen, aus drei Teilen zusammengesetzt. Mit der Gabelsäule 74 sind zwei kurze Gabelrohre 76, 78 fest verbunden, die an ihrem unteren Ende offen sind, so daß Gabelzinken 80 und 82 eingesteckt werden können. Die Gabelzinken 80 und 82 sind lösbar in den Gabelrohren 76 und 78 befestigt. An den unteren Enden weisen die Gabelzinken 80 und 82 Lager 84 für eine nicht dargestellte Vorderradachse auf. Lageraugen 86 sind für die Befestigung der Scheibenbremsen für das Vorderrad vorgesehen. Wenn das Gabelrohr 74 in das Rohr 68 an dem Rahmen eingesteckt ist, wird von oben der mit einem Befestigungsschild 88 versehene Rohrabschnitt 90 eingesteckt und über einen Spannkonus 92 mit der Gabelsäule 74 verbunden. Der Steuerkopf 28 ist einmal an dem Befestigungsschild 88 mittels Schrauben befestigt, zum anderen ist er im unteren Bereich mit Lageraugen 94 versehen, über die er mit an der Gabel 14 angebrachten Lageraugen 96 verbunden wird. Unten ist an dem Steuerkopf 28 ein Schutzblech 98 für das Vorderrad angebracht.

Der Lenker 16 ist im vorderen Bereich geschlossen ringförmig ausgebildet und weist im hinteren Bereich zwei nach unten gerichtete rohrförmige Ansatzstücke 100 auf. Diese Ansatzstücke 100 sind in Hülsen 102 eingesteckt, die an dem Steuerkopf 28 vorgesehen sind. Die Ansatzstücke 100 sind in den Hülsen 102 verschiebbar geführt. Die Arretierung des Lenkers 16 erfolgt über Befestigungseinrichtungen 104, die an dem Steuerkopf vorgesehen sind und beispielsweise in Form von Exzentern ausgebildet sein können, die durch die Wandungen der Hülsen ragen und die Ansatzstücke 100 in den Hülsen verklemmen. Zur Erhöhung der Stabilität sind die Ansatzstücke 100 über eine Querstrebe 106 verbunden. Die Griffe 38 für die Vorderradbremse und für die Hinterradbremse sind so unterhalb des Lenkers angeordnet, daß sie keine Verletzungsgefahr für den Radfahrer darstellen, wenn dieser stürzt und der Lenker verschwenkt wird. Der von dem einen Griff 38 ausgehende Zug zur Hinterradbremse kann durch den Rahmen geführt sein.

Die im hinteren Bereich des Rahmens geführte höhenverstellbare Sattelstange 30 weist an ihrem freien oberen Ende einen in die Horizontale übergehenden Abschnitt 108 auf. Auf diesem Abschnitt 108 kann der Sattel 18 verschoben werden, so daß der Abstand des Sattels zu dem Lenker 16 individuell eingestellt werden kann.

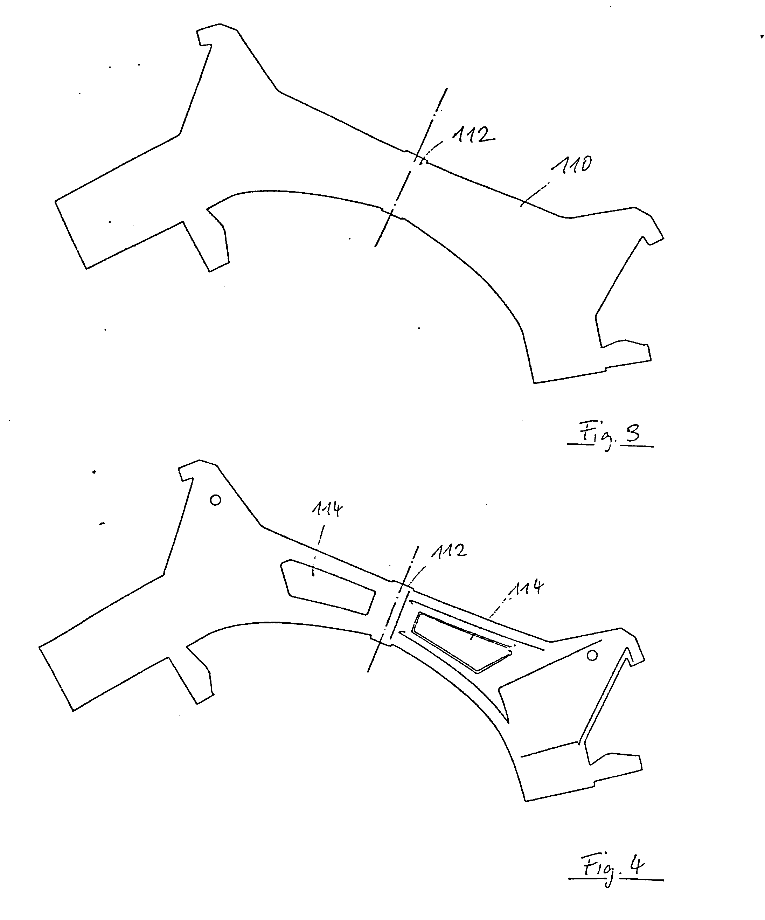

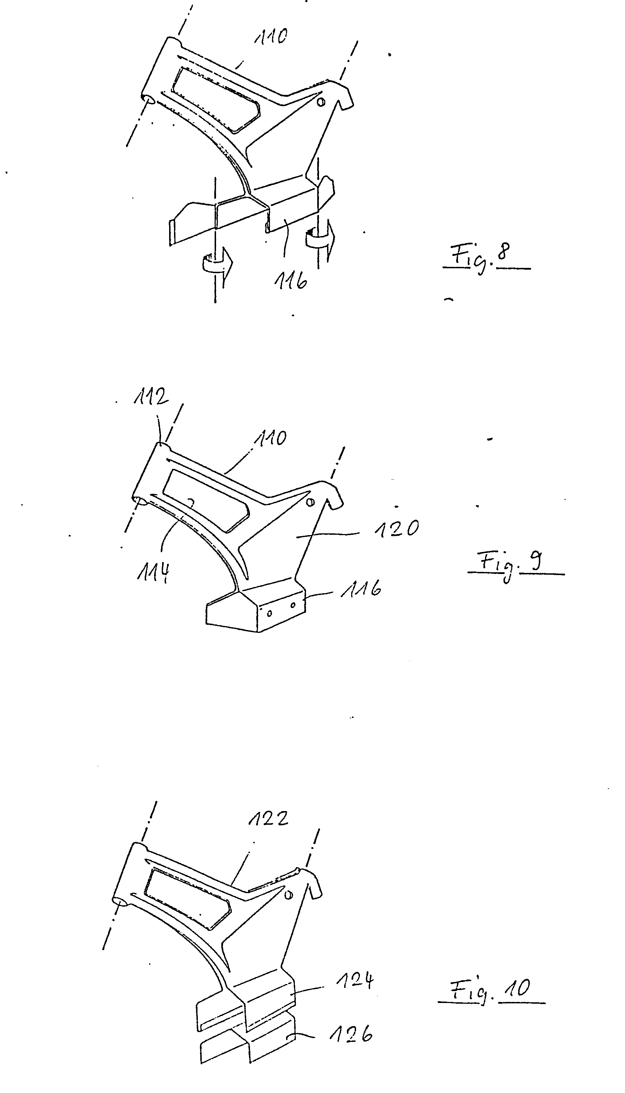

Die Ausbildung des Rahmens 10, des Anlagebereichs 46 und des Antriebsauslegers 20 wird im folgenden anhand der Fig. 3 bis 18 erläutert. Die Fig. 3 bis 9 zeigen einen aus beispielsweise Aluminiumblech bestehenden, aus einem Teil geformten Rahmen 110. Als erster Arbeitsschritt wird aus Aluminiumblech eine Fläche entsprechend Fig. 3 gestanzt. An diesem Teil sind bereits angedeutet der mittlere Bereich 112, der nach Fertigstellung des Rahmens die Führung für eine Gabel ergibt. Zu beiden Seiten des mittleren Bereichs 112 werden aus dem ebenen Stanzteil Ausschnitte 114 herausgestanzt. Gleichzeitig werden aus dem Blech entlang der Ausschnitte 114 und der Randlinien Abkantungen vorgenommen.

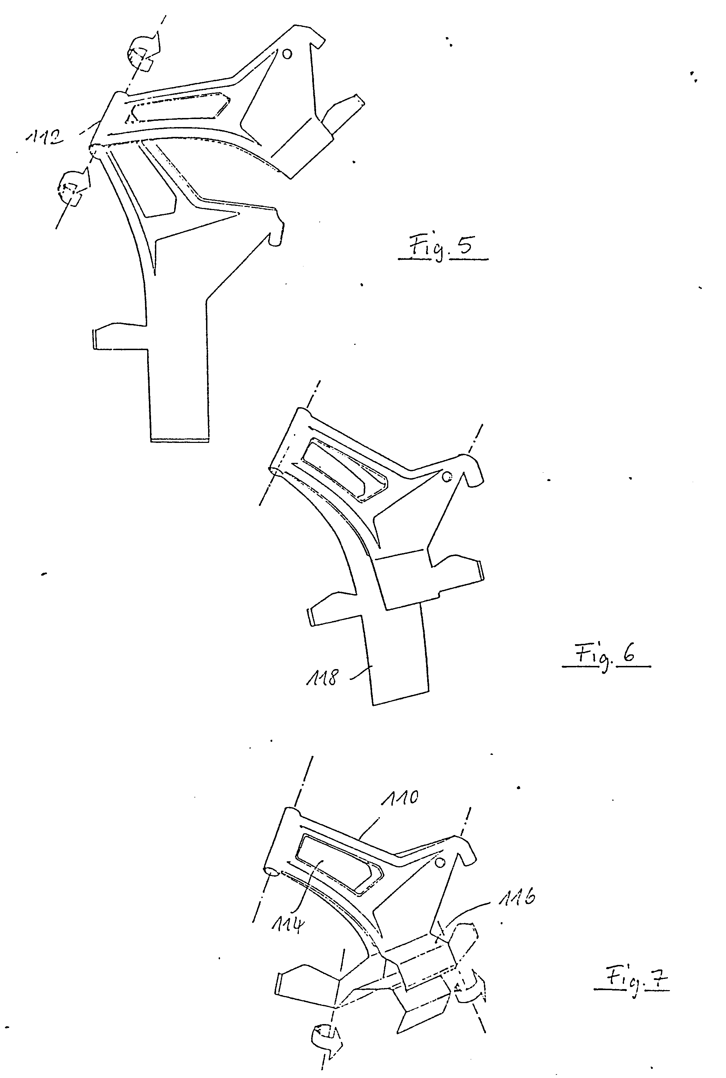

Fig. 5 zeigt einen ersten Faltvorgang, bei dem der mittlere Bereich 112 rohrförmig vorgeformt wird. Die Ränder des Stanzteils sind um entsprechende Bereiche umgebogen, so daß nach dem Falten die Seitenwände entweder unmittelbar aufeinanderliegen oder einen gewissen Abstand aufweisen. In dem Ausführungsbeispiel nach den Fig. 3 bis 9 ist ein Anlagenbereich 116 einstückig an dem Rahmen 110 angeformt. Dieser Anlagebereich 116 wird durch entsprechende Faltungen der Enden des ursprünglich ebenen Stanzteiles ausgebildet. Durch Einschlagen des einen Endes 118 wird der Anlagenbereich 116 doppelwandig ausgebildet, so daß er die geforderte Festigkeit erhält. In dem gezeigten Ausführungsbeispiel erfolgt die Befestigung des eingeschlagenen Endes am Rand durch Umbördeln. Der Anlagebereich 116 wird hinten und vorn durch umgelegte Blechabschnitte verschlossen, so daß sich ein steifer Kasten ergibt. Die Stoßstellen bzw. Nähte zwischen den zusammengeklappten Rahmenwänden werden entweder durch Schweißen oder Bördeln verbunden. Zur Versteifung des Rahmens sind die neben den im fertigen Zustand aufeinanderliegenden Ausschnitten verlaufenden Wandungen mit Sicken versehen. Der Bereich 120 des Rahmens neben den Ausschnitten 114 ist doppelwandig ausgebildet, da zum einen in diesem Bereich die Sattelstange geführt wird und zum anderen dadurch die Festigkeit erhöht wird.

Fig. 10 zeigt ein abgewandeltes Ausführungsbeispiel. Bei diesem Rahmen 122, der ebenfalls durch Falten eines ebenen Stanzteiles hergestellt ist, erfolgt die Versteifung eines Anlagebereiches 124 durch Einfügen eines getrennten Einschubteiles 126, das einen entsprechenden gleichen Querschnitt aufweist wie der aus dem Stanzteil geformte Anlagebereich. Die Befestigung des Einschubteils 126 erfolgt durch Schweißen oder Bördeln.

Ein in Fig. 11 dargestellter Rahmen 128 ist an einer Seite mit einer Seitenwand 130 eines Antriebsauslegers 134 ausgebildet. An der anderen Seite des Rahmens ist ein Teil eines Lagergehäuses 132 angeformt. Um den Antriebsausleger 134 zugänglich zu machen, ist eine abnehmbare Seitenwand 136 vorgesehen.

Fig. 12 zeigt einen Rahmen 138, an dem eine Seitenwand 140 eines Antriebsauslegers 142 einstückig angeformt ist. Eine andere Seitenwand 144 ist vollständig von dem Rahmen 138 abnehmbar.

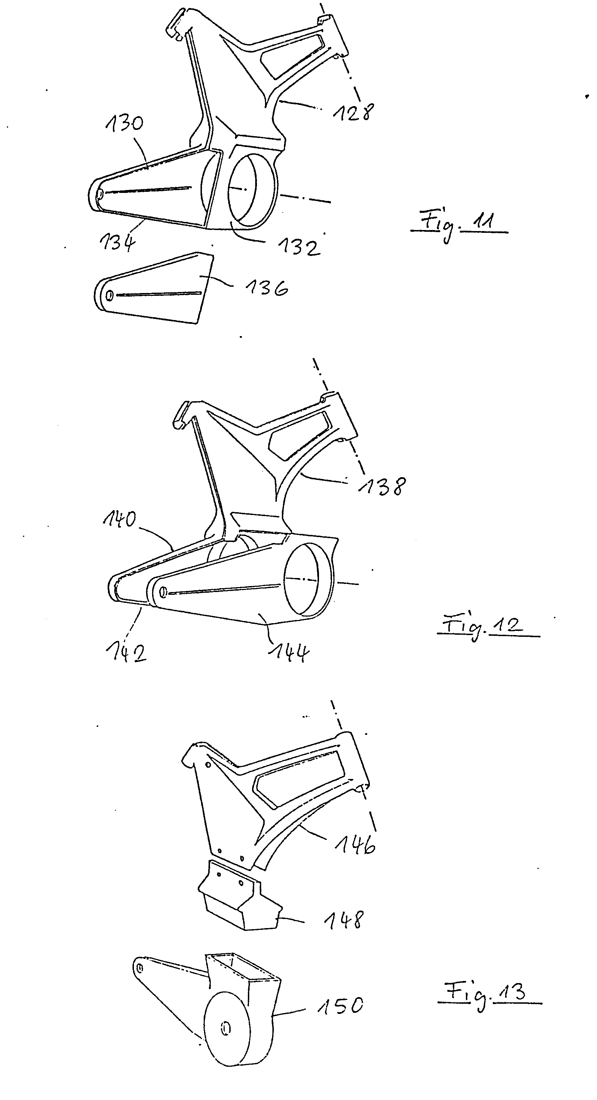

Fig. 13 zeigt einen Rahmen 146, an dem ein getrennt ausgebildeter Anlagebereich 148 vorgesehen ist. An diesem Anlagebereich 148 ist ein einstückig ausgebildeter, von oben offener und damit zugänglicher Antriebsausleger 150 befestigt.

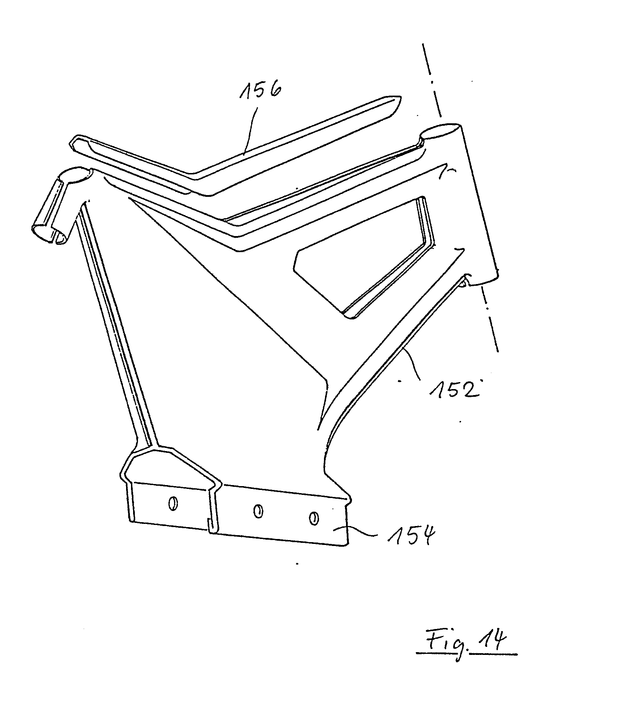

Fig. 14 zeigt einen Rahmen 152 mit einem einstückig angeformten, doppelwandigen Anlagebereich 154, der an der Oberseite mit einer Abdeckleiste 156 versehen ist. Diese Abdeckleiste 156 kann beispielsweise an dem Rahmen 152 verschweißt sein.

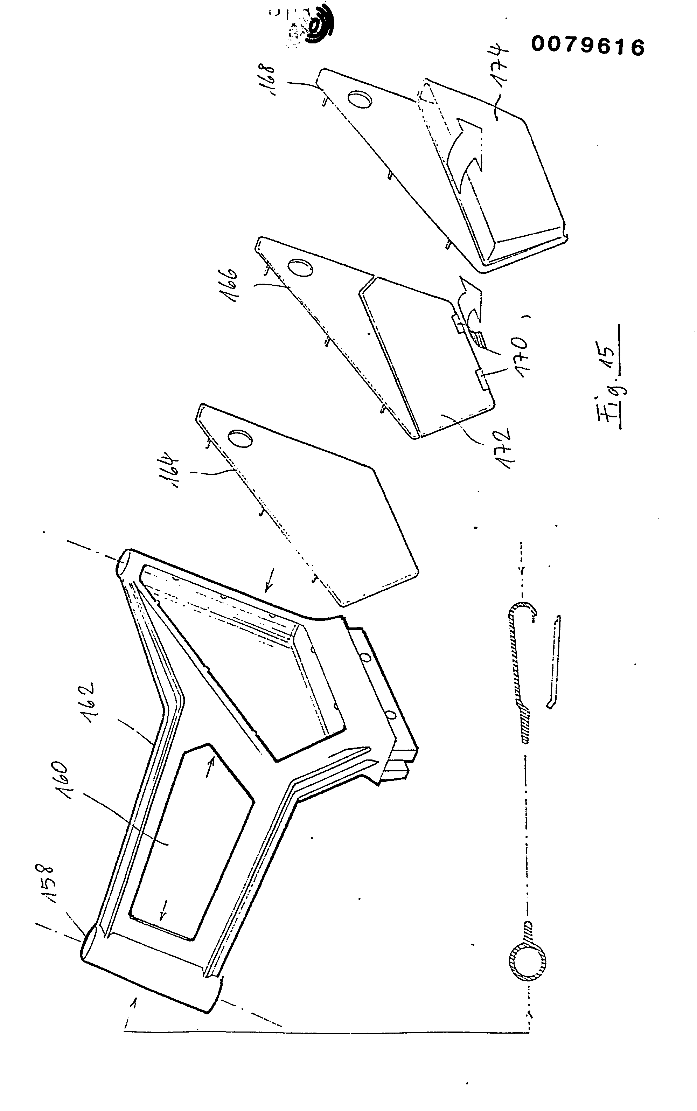

Fig. 15 zeigt eine weitere Ausführungsform eines Rahmens. Dieser mit einem Rohr 158 für eine Gabelsäule und einen Ausschnitt 160 ausgebildete Rahmen 162 ist in seinem hinteren Bereich ebenfalls doppelwandig ausgebildet, jedoch ist eine Seitenwand 164 lösbar an dem Rahmen 162 befestigt. Weiterhin sind alternativ ausgebildete Seitenwände 166 und 168 gezeigt. Die Seitenwand 166 weist unten Scharniere 170 auf, an denen ein Teil 172 der Seitenwand verschwenkbar gelagert ist. Damit ist der doppelwandige Bereich des Rahmens 162 von außen zugänglich, um beispielsweise Werkzeug oder eine Luftpumpe in dem Rahmen verstauen zu können. An der Seitenwand 168 ist ein Kasten 174 unten angelenkt, der aus dem Rahmen heraus verschwenkbar ist und ebenfalls zur Aufnahme von Werkzeug oder anderen kleinen Teilen dient.

Fig. 16 zeigt eine weitere Ausführungsform eines Rahmens 176. Dieser Rahmen weist zwei Ausschnitte 180 und 182 auf. In den Ausschnitt 182 ist eine mit zwei Seitenbehältern 184 versehene Mittelwand 186 einsteckbar. Der Rahmen ist an seiner Oberseite mit einer Abdeckleiste 178 versehen, am unteren Bereich sind Befestigungsrippen 188 für einen Antriebsausleger angeformt. Der Rahmen 176 besteht aus Druckguß.

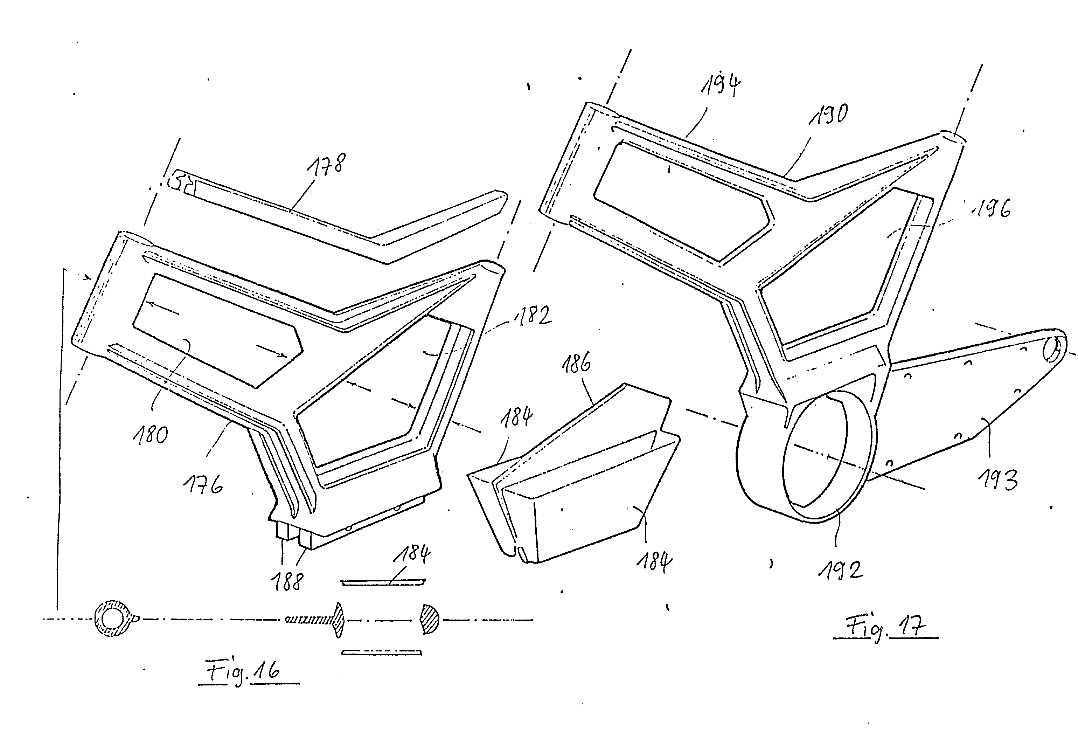

Fig. 17 zeigt einen Rahmen 190, an dem ein Teil eines Antriebsgehäuses 192 einstückig angeformt ist. An diesem Gehäuse ist eine nach hinten gerichtete Seiten-Schale 193 für den Auslegerarm angeformt.

Der Rahmen 190 ist ebenfalls mit zwei Ausschnitten 194 und 196 versehen und aus Druckguß gefertigt.

Die in den Figuren gezeigten Rahmen können entweder aus Aluminiumblech durch Faltung desselben und Verbindung der Nähte mittels Schweißen oder Bördeln hergestellt sein. Es ist aber auch möglich, insbesondere die Rahmen nach den Fig. 15 bis 17 im Druckgußverfahren, beispielsweise ebenfalls aus Aluminium, herzustellen.

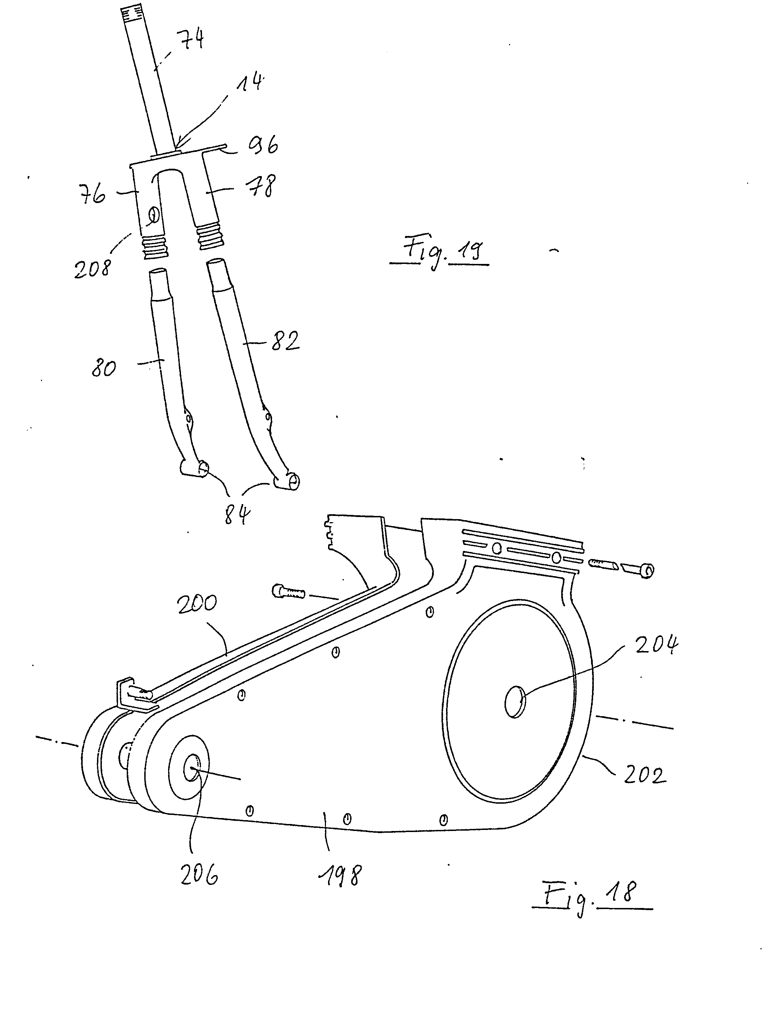

Fig. 18 zeigt einen aus zwei Schalen 198 und 200 bestehenden Antriebsausleger 202. Im vorderen Bereich ist ein Lager 204 für die die Pedalen und das große Kettenrad tragende Achse, am hinteren freien Ende des Auslegers ist ein Lager 206 für die Hinterradachse ausgebildet. Die Schalen des Antriebsauslegers 202 ebenso wie die Antriebsausleger nach den Fig. 11 bis 13 können aus Aluminiumblech oder Aluminiumdruckguß bestehen.

Fig. 19 zeigt in vergrößertem Maßstab die in Fig. 2 dargestellte Vorderradgabel 14 in Explosivdarstellung. Die Gabelzinken 80 und 82 sind aus den Gabelrohren 76 und 78 herausgezogen. Die Gabelzinken 80 und 82 sind an ihren oberen Enden verjüngt und können beispielsweise mit einem Gewinde versehen sein. In dem Gabelrohr 76 ist ein Loch 208 gezeigt, durch das beispielsweise die Leitung einer Hydraulikbremse geführt sein kann.

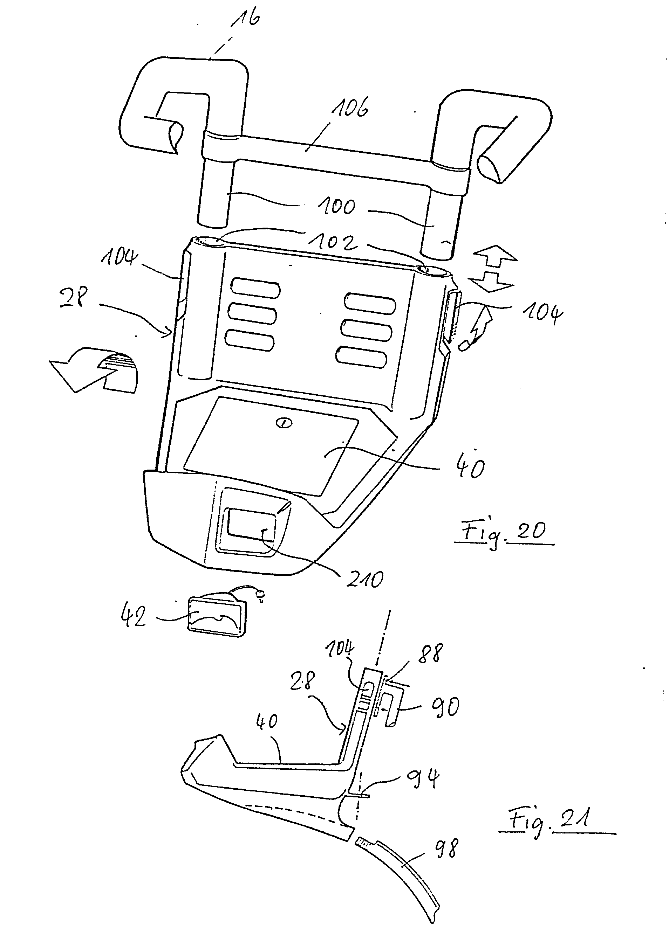

Fig. 20 zeigt in vergrößerter Explosivdarstellung einen Steuerkopf 28 mit aus den Hülsen 102 herausgezogenem Lenker 16, dessen vordere Strebe weggebrochen ist. Der Steuerkopf 28 weist vorne die Ablagefläche 40 auf, auf der beispielsweise eine Tasche oder ein Korb befestigt werden kann. An der erhöht ausgebildeten Stirnwand der Ablagefläche 40 ist links außermittig ein Gehäuse 210 für die Lampe 42 ausgebildet. Die Lampe 42 ist außermittig angeordnet, damit entgegenkommende Fahrzeuge einen entsprechend größeren Abstand von dem Rad bzw. dem Radfahrer halten.

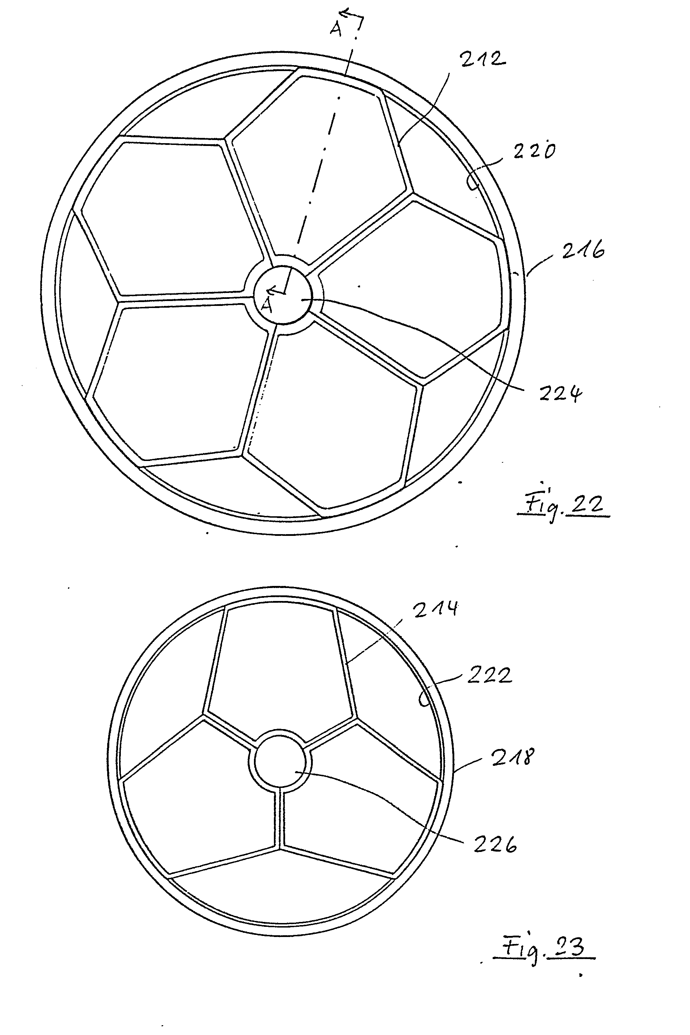

Fig. 21 zeigt den Steuerkopf 28 in Seitenansicht.

Fig. 22 und 23 zeigen zwei aus Speichensegmenten 212 bzw. 214 zusammengesetzte Räder 216 bzw. 218. Das Rad 216 ist aus fünf Segmenten 212 zusammengesetzt, das Rad 218 aus drei Segmenten 214. Die Segmente 212 bzw. 214 weisen an der Peripherie jeweils Nuten auf, in die an den Felgen der Räder 216 bzw. 218 angeformte Stege 220 bzw. 222 eingreifen. Die Verspannung der Speichensegmente in den Felgen erfolgt jeweils über einen Spannkonus 224 bzw. 226. Die Speichensegmente 212, 214 bestehen aus Aluminium oder aus CF-Polyamid-Spritzguß.

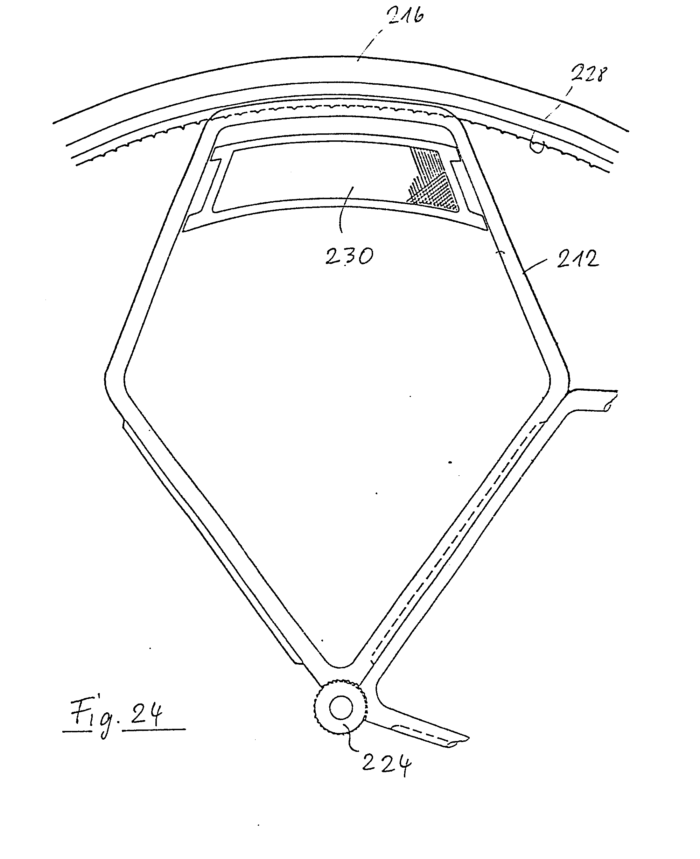

Fig. 24 zeigt in vergrößertem Maßstab ein Speichensegment 212, das an der Felge 228 befestigt ist. Im Zentrum des Rades 216 ist der mit einer Rändelung versehene Spannkonus 224 angeordnet. Benachbarte Speichensegmente greifen mit Nut und Feder ineinander, so daß axial gerichtete Kräfte aufgenommen und übertragen werden können. Die an dem Speichensegment im Felgenbereich ausgebildete Nut bzw. der an der Felge vorgesehene Steg weisen eine Verzahnung auf. An dem Speichensegment 212 von Fig. 24 ist ein Reflektor 230 angebracht.

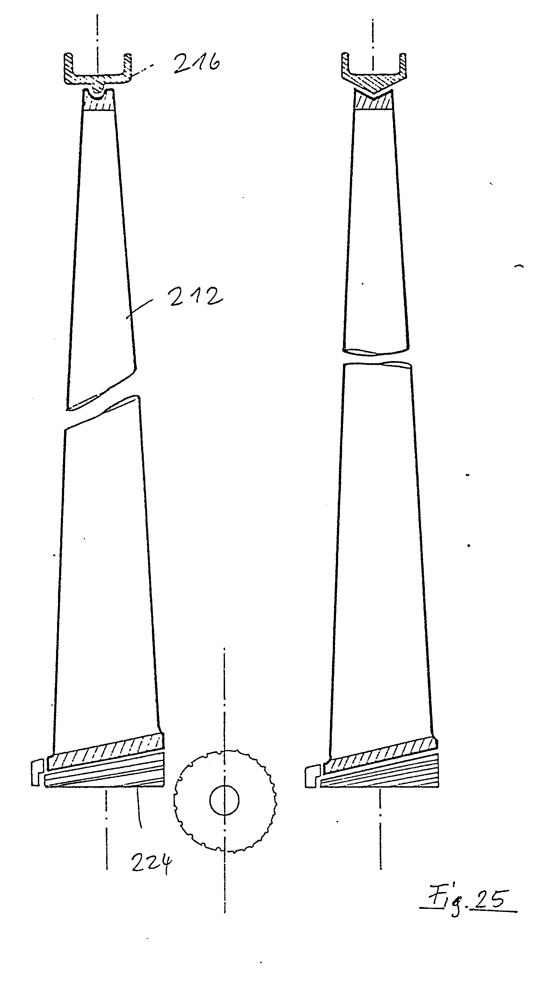

Fig. 25 zeigt Schnitte gemäß der Linie A-A durch Speichensegmente und Felge, aus denen die Ausbildung der an den Speichensegmenten vorgesehenen Nut bzw. der an den Felgen vorgesehenen Stege zu sehen ist. Außerdem ist in Fig. 25 gezeigt, daß der Spannkonus bzw. der Innenrand der Speichensegmente mit einer Rändelung versehen sind.

Wie insbesondere aus Fig. 1 zu ersehen, ist in dem doppelwandig ausgebildeten Bereich des Rahmens 10 ein Schloß 232 vorgesehen, das an der Wandung des Rahmens abschließbar ist und an einer nicht gezeigten Kette hängt, die aus dem Rahmen herausgezogen werden kann. Diese Kette kann beispielsweise um einen Pfahl oder eine Laterne geschlungen und wieder an dem Rahmen eingehängt und verriegelt werden.

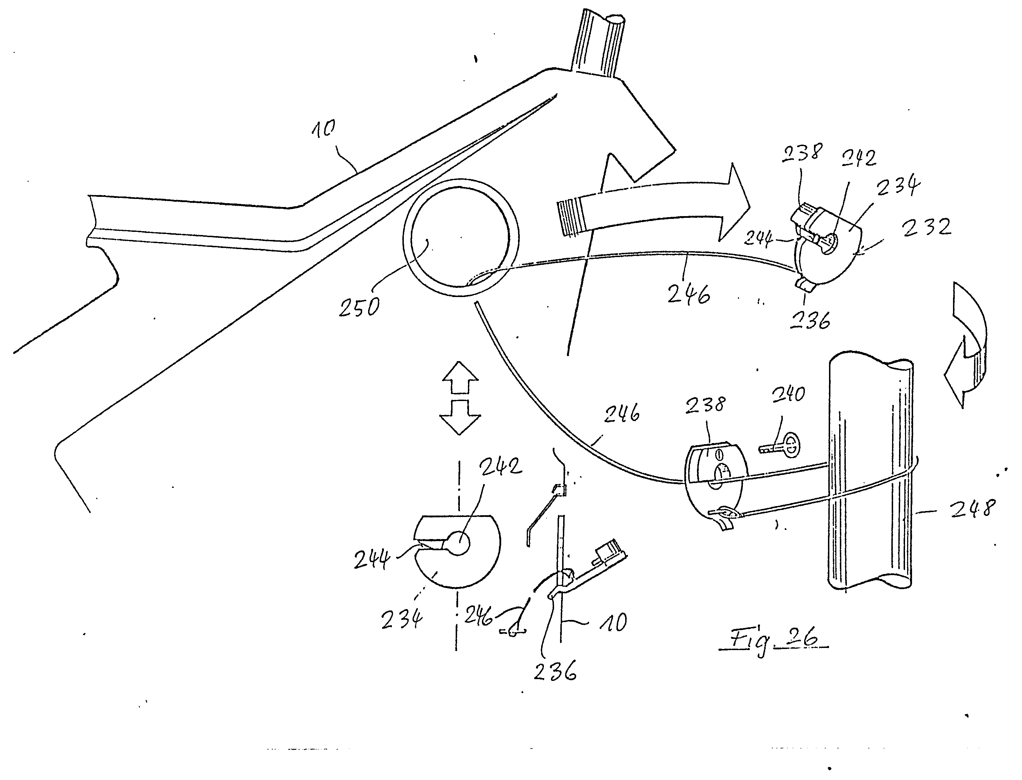

Fig. 26 zeigt das von dem Rahmen 10 abgenommene Schloß 232. Das Schloß besteht aus einer runden Scheibe 234, die unten mit einer Rastnase 236 versehen ist, die die Wandung des Rahmens 10 hintergreift. An der Rückseite der Scheibe 234 ist ein Riegel 238 drehbar angeordnet, der über einen Schlüssel 240 betätigt wird. Die Scheibe 234 weist eine zentrale Durchgangsbohrung 242 und einen von dieser Bohrung ausgehenden Schlitz 244 auf. Das Schloß 232 kann von dem Rahmen 10 abgenommen werden, wodurch die hinten an der Scheibe 234 und im Inneren des Rahmens 10 befestigte Kette oder das Stahlseil 246 herausgezogen wird. Das Seil 246 kann nun um einen Pfahl 248 geschlungen und durch den Schlitz 244 in die Bohrung 242 eingeführt werden. Nach Verdrehen des Riegels 238 verschließt dieser den Schlitz 244, sodaß das Seil oder die Kette 246 eine feste Verbindung zwischen Fahrrad und Pfahl 248 erbringt. Nach Öffnen des Riegels 238 kann das Seil 246 wieder im Rahmen 10 verstaut werden und das Schloß 232 wird in der Öffnung 250 im Rahmen 10 eingehängt und gesichert.

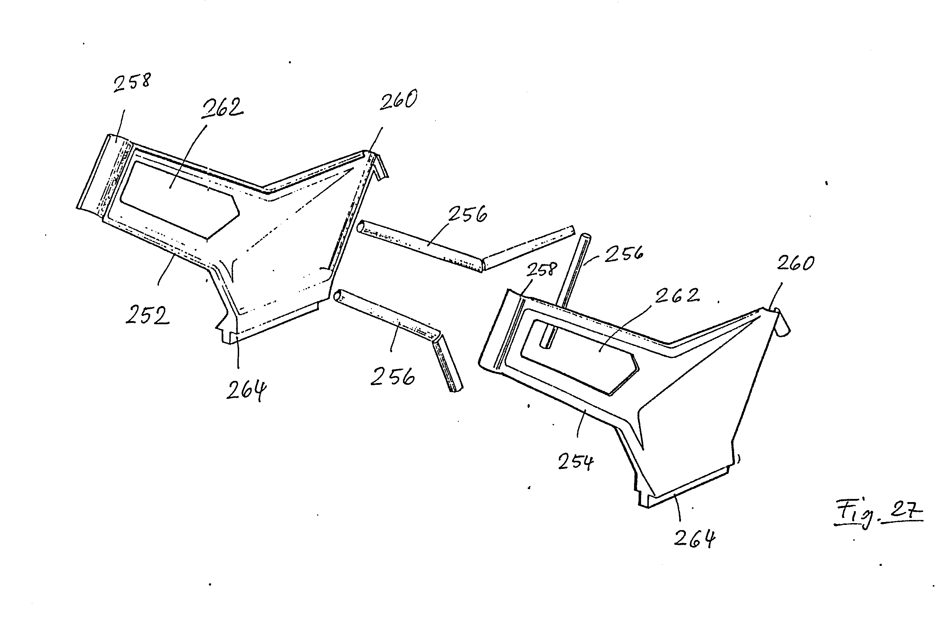

In Fig. 27 ist ein Rahmen gezeigt, der aus zwei Schalen 252, 254 aus Kunststoff besteht, die miteinander durch schweißen oder kleben verbunden werden. In den Randbereichen unterhalb der Schmalseiten sind innerhalb der Schalen Rohrprofile 256 aus kohlenstofffaserverstärktem Kunststoff (CFK) zur Verstärkung eingelegt. Am vorderen Ende der Schalen sind halbzylinderförmige Ansätze 258 angeformt zur Aufnahme einer Fahrradgabel 14. Im hinteren Bereich des Rahmens ergibt sich bei dem Zusammenfügen der Schalen 252 und 254 eine Öffnung 260 für den Durchgang der Sattelstange. Die Schalen 252 und 254 sind anschließend an die Zylinderschalen 258 mit Öffnungen 262 ausgebildet. Die unten an den Schalen 252 und 254 ausgebildeten Bereiche 264 ergänzen sich nach dem Zusammenfügen der Schalen zu einem Anlagebereich für einen Antriebsausleger.

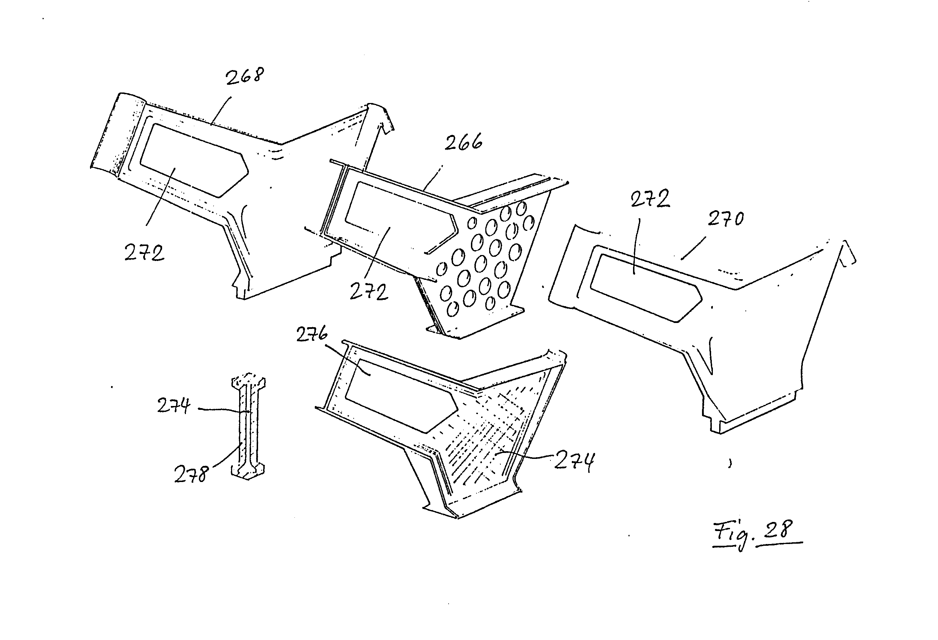

Fig. 28 zeigt eine andere Ausführungsform eines Fahrradrahmens aus Kunststoff. Dabei ist eine Einlage 266 entweder mit einem PU-Schaum ummantelt oder durch ein glasfaserverstärktes Polyamid umgeben. Die Einlage 266 besteht aus Lochblech und ist in den Vertikalschnitten als Doppel-T-Profil ausgebildet. Zwei Schalen 268 und 270 aus glasfaserverstärktem Polyamid schließen die Lochblecheinlage 266 ein. Sowohl die Schalen 268 und 270 als auch die Einlage 266 sind mit Ausschnitten 272 ausgebildet. An Stelle einer Lochblecheinlage 266 kann eine Einlage 274 aus SMC (sheet moulding compound) von den zwei Kunststoffschalen 268 und 270 eingepaßt werden. Auch diese SMC Einlage 274 ist mit einem Ausschnitt 276 versehen und im Vertikalschnitt als Doppel-T-Profil ausgebildet. Sowohl die Einlage 266 als auch die Einlage 274 können mit einem Schaum aus Hart-Polyurethan-Elastomer (PU) 278 ummantelt sein.

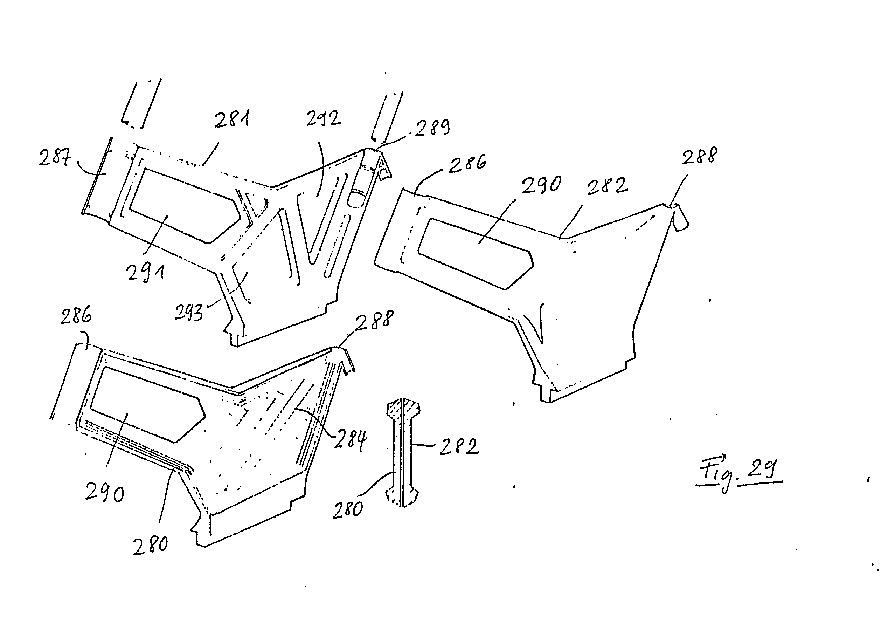

Eine weitere Ausführungsform eines Fahrradrahmens aus Kunststoff ist in Fig. 29 gezeigt. Dieser Rahmen besteht aus zwei Schalen aus SMC (sheet moulding compound) 280, 282, die mit einer kraftflußgerechten Kohlenstoffasereinlage 284 versehen sind. Die Schalen 280 und 282 weisen zylindrische Halbschalen 286 für eine Gabel und Öffnungen 288 für die Sattelstange auf. Zudem sind die Schalen mit Ausschnitten 290 ausgebildet.

Fig. 29 zeigt weiter eine abgewandelte Ausführungsform einer Schale 281 mit Aufnahmen 287 und 289 für eine Gabel bzw. eine Sattelstange. Neben einer Ausnehmung 291 sind bei dieser Schale weitere Ausnehmungen 292, 293 ausgebildet. Diese Ausgestaltung der Schale ist möglich durch eine entsprechende Ausrichtung der Kohlenstofffasereinlage.

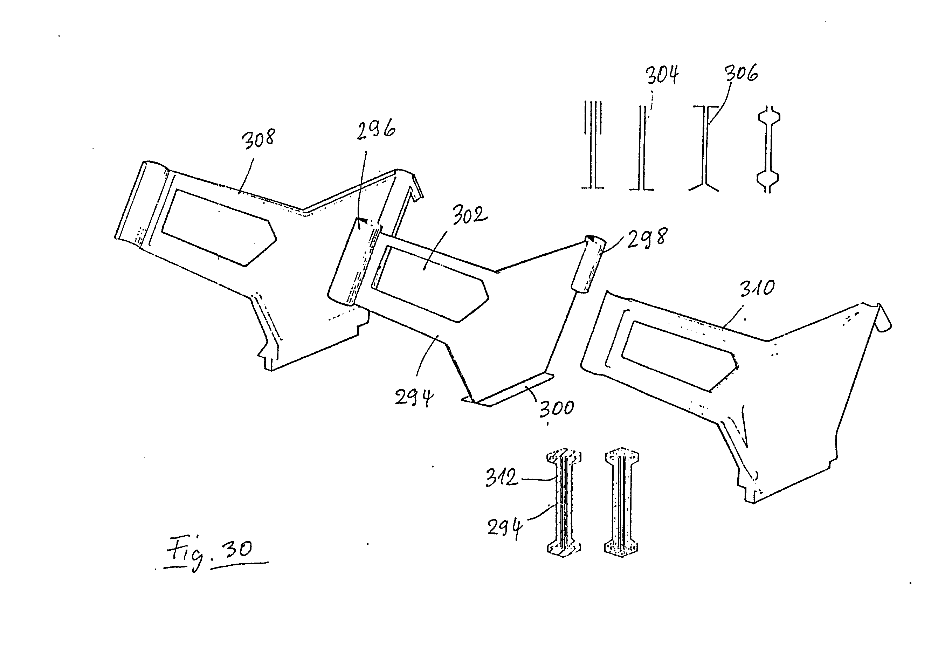

In Fig. 30 ist ein Rahmen gezeigt, der aus einer Einlage 294 aus SMC besteht, an der Hohlzylinder 296 und 298 für eine Gabel bzw. eine Sattelstange angeformt sind. An der Unterseite ist eine Verstärkungsrippe 300 vorgesehen, die dem Anlagebereich für einen Antriebsausleger die nötige Festigkeit verleiht. Die Einlage 294 ist mit einem Ausschnitt 202 versehen. Die als Harzmatte ausgebildete Einlage 294 kann beispielsweise als Doppel-L-Profil 304 oder als Doppel-T-Profil 306 ausgebildet sein. Eingefaßt wird die Einlage 294 auf beiden Seiten beispielsweise durch Schalen aus SMC mit kraftflußgerechter Kohlenstoffasereinlage 308 und 310, wobei diese Schalen heiß gepreßt sein können. Es ist aber auch möglich, die Einlage 294 mit einem Schaum 312 in Schaumtechnologie zu ummanteln.

Die in den Fig. 27 bis 30 gezeigten Fahrradrahmen aus Kunststoff zeichnen sich durch ein geringes Gewicht bei großer Festigkeit und günstigen Herstellungskosten aus. Die Rahmen sind ebenfalls wie die Rahmen aus Blech oder Metallguß geformt und können mit den dort beschriebenen Teilen versehen bzw. ausgebildet sein.

Hans A. Muth, Schmiedweg 1, 8031 Seefeld 3

Fahrrad

Ansprüche

1. Fahrrad mit einem Rahmen, mit einem Tretlager und einer Lagerung für ein Hinterrad, mit einer drehbaren Gabel zur Lagerung eines Vorderrades, mit einem Lenker und mit einem Sattel, dadurch g e - k e n n z e i c h n e t , daß der Rahmen (10) aus einem Stück gefertigt oder aus zwei Schalen zusammengesetzt ist, daß das Tretlager in einer Antriebseinheit (20) in Form eines Auslegers ausgebildet ist und daß am freien Ende des Auslegers (20) die Lagerung für das angetriebene Hinterrad (24) vorgesehen ist.

8 MÜNCHEN 86, SIEBERTSTR. 4 · POB 860720 · KABEL: MUEBOPAT · TEL. (0 89) 47 40 05 · TELECOPIER XEROX 400 · TELEX 5-24 285

2. Fahrrad nach Anspruch 1, dadurch gekennzeichnet, daß der Rahmen (162,176,190) aus Druckguß besteht.

3. Fahrrad nach Anspruch 1, dadurch gekennzeichnet, daß der Rahmen (110) aus Blech geformt ist, das im Aufnahmebereich (112) der Gabel (14) rohrförmig gefaltet und entlang der Stöße verbunden ist.

4. Fahrrad nach Anspruch 1 oder 3, dadurch gekennzeichnet, daß die Stöße an dem Rahmen (10) verschweißt oder gebördelt sind.

5. Fahrrad nach einem der Ansprüche 1 bis 4, dadurch gekennzeichnet, daß an dem Rahmen (10) im wesentlichen parallel zu den Umrißlinien Sicken oder Verstärkungsrippen ausgebildet sind.

6. Fahrrad nach einem der Ansprüche 1 bis 5, dadurch gekennzeichnet, daß unten am Rahmen (10) ein Anlagebereich (46) vorgesehen ist und daß der Antriebsausleger (20) an diesem Anlagebereich (46) befestigt ist.

7. Fahrrad nach Anspruch 6, dadurch gekennzeichnet, daß der Anlagebereich (46) einstückig an dem Rahmen (10) angeformt ist.

8. Fahrrad nach Anspruch 6 oder 7, dadurch gekennzeichnet, daß der Anlagebereich (46) im Querschnitt satteldachförmig mit Seitenwangen ausgebildet ist.

9. Fahrrad nach einem der Ansprüche 6 bis 8, dadurch gekennzeichnet, daß die Wandungen des Anlagebereichs (46) doppelwandig ausgebildet sind.

10. Fahrrad nach einem der Ansprüche 6 bis 9, dadurch gekennzeichnet, daß der Antriebsausleger (150) einstückig ausgebildet und lösbar an dem Anlagebereich (148) befestigt ist.

11. Fahrrad nach einem der Ansprüche 1 bis 10, dadurch gekennzeichnet, daß der Antriebsausleger (20) aus zwei Seitenschalen (50,52) zusammengesetzt ist.

12. Fahrrad nach einem der Ansprüche 1 oder 9, dadurch gekennzeichnet, daß der Antriebsausleger (134, 142) einstückig an dem Rahmen angeformt ist und daß eine Seitenwand (136,144) des Antriebsauslegers ganz oder teilweise abnehmbar ist.

13. Fahrrad nach einem der Ansprüche 1 bis 12, dadurch gekennzeichnet, daß der Antriebsausleger aus Blech oder Druckguß besteht.

14. Fahrrad nach einem der Ansprüche 1 bis 13, dadurch gekennzeichnet, daß Rahmen und/oder Antriebsausleger aus Aluminium bestehen.

15. Fahrrad nach einem der Ansprüche 1 bis 14, dadurch gekennzeichnet, daß der Rahmen im vorderen Bereich auf die Lenksäule (112) folgend einen Ausschnitt (114) aufweist und im hinteren Bereich doppelwandig ausgebildet ist.

16. Fahrrad nach Anspruch 15, dadurch gekennzeichnet, daß der Rahmen im Bereich des Ausschnitts gebördelt ist.

17. Fahrrad nach einem der Ansprüche 1 bis 16, dadurch gekennzeichnet, daß im hinteren Bereich des Rahmens (10) eine Sattelstange (30) höhenverstellbar geführt ist und daß die Sattelstange (30) an ihrem freien oberen Ende einen in die Horizontale übergehenden Abschnitt (108) aufweist.

18. Fahrrad nach einem der Ansprüche 1 bis 17, dadurch gekennzeichnet, daß zwischen dem freien Ende des Antriebsauslegers (20) und dem hinteren oberen Bereich (58) des Rahmens (10) eine lösbare Strebe (42) zur Befestigung beispielsweise eines Schutzbleches (62) vorgesehen ist.

19. Fahrrad nach einem der Ansprüche 1 bis 18, dadurch gekennzeichnet, daß die Gabel (14) aus einer im Rahmen (10) drehbar gehaltenen Gabelsäule (74) mit zwei kurzen Gabelrohren (76,78) besteht und daß die die Achse des Vorderrades (26) tragenden Gabelzinken (80,82) in diese Gabelrohre (76,78) einsteckbar und befestigbar angeordnet sind.

20. Fahrrad nach Anspruch 19, dadurch gekennzeichnet, daß oben an der Gabelsäule (74) ein Befestigungsschild (88) vorgesehen ist und daß an dem Befestigungsschild (88) und oben an den Gabelrohren (76, 78) ein Steuerkopf (28) befestigt ist.

21. Fahrrad nach Anspruch 20, dadurch gekennzeichnet, daß an dem Steuerkopf (28) ein Lenker (16) mit Griffen (38) für die Bremsen angeordnet ist.

22. Fahrrad nach Anspruch 21, dadurch gekennzeichnet, daß der Lenker (16) im vorderen Bereich geschlossen ringförmig ausgebildet ist und im hinteren Bereich zwei nach unten gerichtete rohrförmige Ansatzstücke (100) zur Befestigung am Steuerkopf (28) aufweist.

23. Fahrrad nach Anspruch 22, dadurch gekennzeichnet, daß die rohrförmigen Ansatzstücke (100) des Lenkers (16) in Hülsen (102) am Steuerkopf (28) eingesteckt sind und mit Befestigungseinrichtungen (104) arretiert sind.

24. Fahrrad nach einem der Ansprüche 20 bis 23, dadurch gekennzeichnet, daß am Steuerkopf (28) ein Schutzblech (98) für das Vorderrad (26) und eine Ablagefläche (40) angeordnet sind.

25. Fahrrad nach einem der Ansprüche 1 bis 24, dadurch gekennzeichnet, daß ein Rücklicht (44) im Sattel (18) integriert ist und daß eine Lampe (42) in Fahrtrichtung außermittig links am Steuerkopf (28) angeordnet ist.

26. Fahrrad nach einem der Ansprüche 1 bis 25, dadurch gekennzeichnet, daß in dem doppelwandigen Bereich des Rahmens eine teilweise herausziehbare Kette oder ein Stahlseil (246) mit einem Schloß (232) vorgesehen ist.

27. Fahrrad nach Anspruch 26, dadurch gekennzeichnet, daß auf beiden Seiten des Rahmens eine Verriegelungsvorrichtung für das Schloß vorgesehen ist.

28. Fahrrad nach Anspruch 26 oder 27, dadurch gekennzeichnet, daß das Schloß (232) scheibenförmig rund ausgebildet ist, daß in der Mitte der Scheibe (234) eine Durchgangsbohrung (242) vorgesehen ist, daß von dieser Durchgangsbohrung (242) aus ein Schlitz (244) zum Rand der Scheibe (234) hin vorgesehen ist und daß an der Rückseite der Scheibe (234) ein mit einem Schlüssel (240) betätigbarer Riegel (238) angelenkt ist.

29. Fahrrad nach einem der Ansprüche 1 bis 28, dadurch gekennzeichnet, daß Hinterrad (24) und Vorderrad (26) identisch ausgebildet sind.

30. Fahrrad nach Anspruch 29, dadurch gekennzeichnet, daß die Räder (24,26) aus einer Felge (228) und Speichensegmenten (212,214) zusammengesetzt sind und daß die Speichensegmente (212,214) mittels eines Spannkonus (224,226) gegen die Felgen (228) gedrückt sind.

31. Fahrrad nach einem der Ansprüche 1 bis 30, dadurch gekennzeichnet, daß der Antriebsausleger (20) asymmetrisch ausgebildet ist und daß das Hinterrad (24) seitlich neben dem Antriebsausleger (20) angeordnet ist.

32. Fahrrad nach einem der Ansprüche 1 bis 31, dadurch gekennzeichnet, daß der doppelwandig ausgebildete Bereich des Rahmens (162,176) mit einer Klappe (172) oder einem Behälter (174,184) versehen ist.

33. Fahrrad nach einem der Ansprüche 1 und 6 bis 32, dadurch gekennzeichnet, daß der Rahmen aus Kunststoff besteht.

34. Fahrrad nach Anspruch 33, dadurch gekennzeichnet, daß der Rahmen aus zwei miteinander verbundenen Schalen (252, 254) aus Kunststoff besteht und daß zwischen die Schalen ein Versteifungsprofil (256) eingelegt ist.

35. Fahrrad nach Anspruch 34, dadurch gekennzeichnet, daß das Versteifungsprofil (256) ein CFK-Rohrprofil (kohlenstoffaserverstärkt) ist und daß die Schalen (252, 254) und das Versteifungsprofil (256) verschweißt oder verklebt sind.

36. Fahrrad nach Anspruch 34 oder 35, dadurch gekennzeichnet, daß das Versteifungsprofil (256) in den Randbereichen zwischen den Schalen (252, 254) angeordnet ist.

37. Fahrrad nach Anspruch 33, dadurch gekennzeichnet, daß der Rahmen aus einer Einlage (266, 274) besteht, und daß die Einlage mit Kunststoff ummantelt ist.

38. Fahrrad nach Anspruch 37, dadurch gekennzeichnet, daß die Einlage (266) aus Blech besteht.

39. Fahrrad nach Anspruch 38, dadurch gekennzeichnet, daß das Blech der Einlage (266) ein Lochblech ist.

40. Fahrrad nach einem der Ansprüche 37 bis 39, dadurch gekennzeichnet, daß die Einlage (266) als Doppel-T-Profil ausgebildet ist.

41. Fahrrad nach Anspruch 37, dadurch gekennzeichnet, daß die Einlage (274) eine Harzmatte (SMC - sheet moulding compound) ist.

42. Fahrrad nach Anspruch 41, dadurch gekennzeichnet, daß die Einlage (274) als Doppel-T-Profil ausgebildet ist.

43. Fahrrad nach einem der Ansprüche 37 bis 42, dadurch gekennzeichnet, daß die Ummantelung der Einlage (266, 274) ein PU-Schaum (278) ist.

44. Fahrrad nach Anspruch 33, dadurch gekennzeichnet, daß der Rahmen aus glasfaserverstärktem Polyamid mit einer Einlage besteht.

45. Fahrrad nach Anspruch 44, dadurch gekennzeichnet, daß die Einlage aus Blech, Lochblech oder SMC besteht.

46. Fahrrad nach Anspruch 45, dadurch gekennzeichnet, daß die Einlage ein Doppel-T-Profil ist.

47. Fahrrad nach Anspruch 33, dadurch gekennzeichnet, daß der Rahmen aus Schalen (280, 282, 281) aus SMC (Harzmatten) mit kraftflußgerechter Kohlenstofffasereinlage (284) besteht.

48. Fahrrad nach Anspruch 47, dadurch gekennzeichnet, daß die Rahmenschalen (280, 282) heiß gepreßt und miteinander verschweißt oder verklebt sind.

49. Fahrrad nach Anspruch 48, dadurch gekennzeichnet, daß der Rahmen Harzmatten (SMC) (294, 304, 306) mit Kohlenstoffasereinlage aufweist und daß die Harzmatten in Schaumtechnologie mit einem Schaum (312) ummantelt sind.

50. Fahrrad nach Anspruch 30, dadurch gekennzeichnet,daß die Speichensegmente (212, 214) aus Aluminium oder aus CF-Polyamid-Spritzguß bestehen.

Fig. 1

Fig.2

Fig. 3

Fig. 4

Fig. 5

Fig. 6

Fig. 7

Fig. 8

Fig. 9

Fig. 10

0079616

130

128

134  132

Fig. 11

136

138

140

142  144

Fig. 12

146

148

150

Fig. 13

156

152

154

Fig. 14

158  160  162  164  166  168

172  170  174

0079616

Fig. 15

178

382

182

180

176

188

184

Fig. 16

186

184

184

194

190

196

193

192

Fig. 17

1/7

0079616

74

14

96

76

78

208

82

80

84

_Fig. 19_

200

204

202

206

198

_Fig. 18_

Fig. 20

Fig. 21

**0079616**

Fig. 22

Fig. 23

Fig. 24

216

212

224

Fig. 25

0079616

Fig. 26

Fig. 27

Fig. 28

Fig. 29

Fig. 30

Europäisches Patentamt

**EUROPÄISCHER RECHERCHENBERICHT**

**0079616**
Nummer der Anmeldung

EP 82 11 0593

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 933 373 (GAMMELGAARD) <br> * Insgesamt * | 1,6,10 | B 62 K 19/00 |
| A | FR-A-2 265 602 (RAMOND) <br> * Seite 1, Zeilen 4,5 * | 2 | |
| A | US-A-4 230 332 (PORSCHE) <br> * Figure 1; Spalte 4, Zeilen 37-53 * | 3,7,11 | |
| A | EP-A-0 006 586 (UHLIRSCH) <br> * Zusammenfassung * | 4 | |
| A | FR-A-2 451 311 (OLSSON) <br> * Figur 4 * | 9,29 | |
| A | FR-A-2 337 655 (MANUFRANCE) <br> * Figur 3 * | 20 | RECHERCHIERTE SACHGEBIETE (Int. Cl. 3) <br><br> B 62 K |
| A | US-A-4 139 072 (DAWSON) <br> * Figur 1 * | 15 | |

Der vorliegende Recherchenbericht wurde für alle Patentansprüche erstellt.

| Recherchenort <br> DEN HAAG | Abschlußdatum der Recherche <br> 22-02-1983 | Prüfer <br> GEMMELL R.I.D. |
|---|---|---|